# EUROPEAN PATENT APPLICATION

(11) **EP 1 006 677 A1**
(43) Date of publication of application: **07.06.2000**
(21) Application number: 98307974.0
(22) Date of filing: 30.09.1998
(51) Int. Cl.: H04B 7/185

(54) **Satellite data communication with radio path suspension in maintenance mode**

(71) Applicant: ICO Services Ltd., London W6 9BN (GB)
(72) Inventor: Mullins, Dennis, London, SE11 5UL (GB); Goerke, Thomas, Middlesex, HA7 3PN (GB)
(74) Representative: Read, Matthew Charles

(57) **Abstract**

A satellite communications system 10 16 18 20 comprises a base station 24 which communicates digitally with a user terminal 14 on the surface of the earth 12 by a radio path 26. The radio path, once established, is sent into a maintenance mode whenever the data communications is temporarily suspended and there is no data to transmit. When new data to transmit becomes available, the radio path is rapidly recovered from maintenance mode and data communications is continuesd.

## Description

The present invention relates to data communications in a system where part of the communications path includes a radio path. In particular, the invention relates to such satellite communications system where an earth segment can communicate, via an orbiting satellite, with a user terminal elsewhere on the surface of the earth.

In a satellite communications system, an earth segment, including an earth station and associated connective equipment to allow communications into and out of the terrestrial network, is in two-way communications with a user terminal, by means of signals relayed through a satellite which is visible both to the earth station and to the user terminal.

The user terminal is (in general) battery powered. When sending signals to the satellite, the user terminal uses much more power than when the user terminal is simply receiving signals from the satellite.

The satellite is (in general) power by solar panels which have a finite power output. At times of solar eclipse (as the satellite passes behind the earth so that the Sun is obscured), the satellite relies upon storage batteries to maintain its energy requirements. The satellite uses considerably more power when transmitting to a user terminal than when it receives signals from a user terminal. The finite nature of the available satellite power means that, should enough power not be available to transmit to all channels, the power in each channel must be reduced or it may not be possible to use some of the channels .

Data communications, particularly packet data, is characterised by the possibility of there being long periods where neither side in the communication is actually transferring data. The system is therefore potentially inefficient and much of the transmission power is wasted doing nothing.

The finite battery life of the user terminal and the finite available power of the satellite means that packet data communications can be needlessly wasteful of power from both ends of the communications link. The present inventions seeks to show a simple and direct means whereby the inefficiencies of data communication can be accommodated, with minimal detriment to the power capacities mentioned above.

According to a first aspect, the present invention consists in method for conducting data communications between a base station and a user terminal, via a radio path, said method including the steps of: establishing a radio communications channel between said base station and said user terminal; establishing a data communications channel ,via said radio communications channel, between said base station and said user terminal; determining whether or not said base station or said user terminal has data to send; maintaining said data communications channel between said base station and said user terminal when either said base station or said user terminal has data to send; disestablishing said data communications channel when neither said user terminal nor said base station has data to send; reestablishing said data communications channel when either or both of said user terminal and said base station have data to send; and maintaining said radio communications channel in a minimal power maintenance mode whenever said data communications channel is disestablished.

According to a second aspect, the present invention consists in a communications system for conducting data communications between a base station and a user terminal, via a radio path, said system being operative to establish a radio communications channel between said base station and said user terminal: said system being operative to establish a data communications channel ,via said radio communications channel, between said base station and said user terminal: said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

According to a third aspect, the present invention consists in a user terminal for use in a communications system for conducting data communications between a base station and said user terminal, via a radio path, said system being operative to establish a radio communications channel between said base station and said user terminal; said system being operative to establish a data communications channel ,via said radio communications channel. between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

According to a fourth aspect, the present invention consists in a base station, for use in a communications system for conducting data communications between said base station and a user terminal, via a radio path. said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send: and said system being operative to maintaining said radio communications channel in a minimal power maintenance mode whenever said data communications channel is disestablished.

The various aspects of the invention further provide that the maintenance mode includes reducing the power of said radio communications channel to the minimum power which will maintain the radio communications channel in an open condition.

The various aspects of the invention, yet further, provide that the maintenance mode includes reducing the power of the radio communications channel to zero, and maintaining the radio communications channel in an open conditions via periodic messages on a signalling channel.

The various aspects of the invention, further, provide that the data communications includes packet data communication.

The various aspects of the invention, further. provide that determination is made whether or not the base station or the user terminal has data to send whenever the user terminal and the base station each have no data to send and neither the user terminal nor the base station has received any data for more than a predetermined period.

The various aspects of the invention further provide that the user terminal and the base station are each independently operable to initiate disestablishment of the data communications channel.

The various aspects of the invention further provide that determination that the user terminal or the base station has data to send for initiating reestablishment of the data communications channel is made whenever either the user terminal or the base station has accumulated more than a predetermined amount of data for sending.

The various aspects of the invention further provide that both the user terminal and the base station are independently operable to initiate reestablishment of the data communications channel.

The various aspects of the invention also provide that the base station can be either a cellular radio base station, or can comprise an earth station and a communications satellite.

The invention is further explained, by way of an example, by the following description. in conjunction with the appended drawings, in which:

Figure 1 is diagramatically representative of the environment within which the preferred embodiments of the invention function.

Figure 2 is a flowchart of the activity of the earth station of Figure 1 when acting in accordance with a first embodiment of the invention.

Figure 3 is a flowchart of the activity of the user terminal of Figure 1 when co-operating with the earth station of Figure 2.

Figure 4 is a flowchart of the activity of the earth station of figure 1 when acting according to a second embodiment of the invention.
and

Figure 5 is a flowchart of the activity of the user terminal when co-operating with the earth station of figure 4.

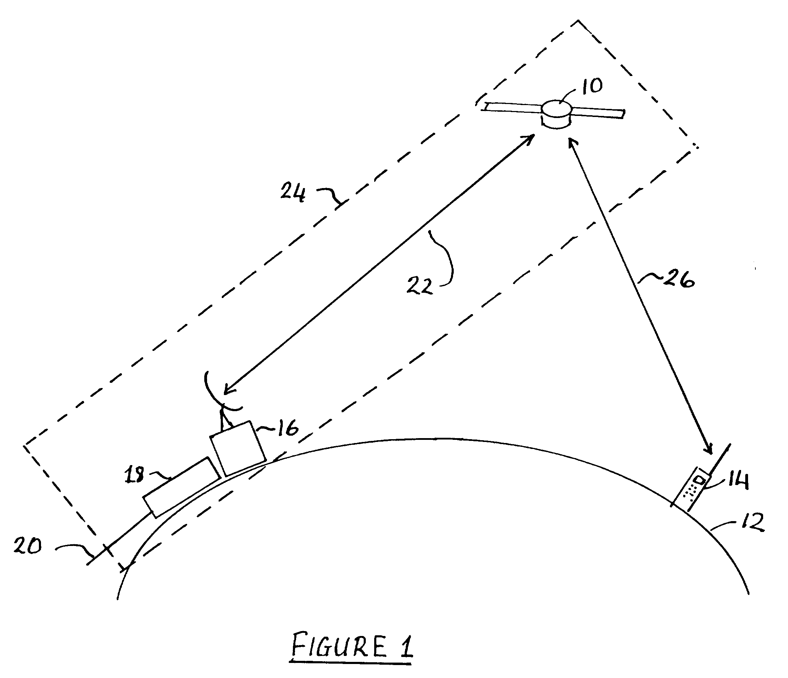

Figure 1 shows the general environment of the preferred embodiments of the present invention.

A communications satellite 10 is in orbit above the surface of the Earth 12. A user terminal 14, visible to the satellite 10, is situated at a first location on the surface of the earth 12. A satellite earth station 16 is situated at a second point on the surface of the Earth 12. The satellite 10 is also visible to the earth station 16. An earth station controller 18 controls the earth station 16 and also provides connection 20 to terrestrial telephone or data networks in the normal manner. A bidirectional satellite radio relay 22 allows the earth station 16 to exchange voice signals, data signals, messages and commands with the satellite 10. The earth station 16, controller 18 and satellite 10, together constitute a base station 24, separated in broken outline in Figure 1. The base station 24 communicates with the user terminal 14 by a bidirectional radio path 26 from the satellite 10. The radio path 26 can comprise signals of different frequencies, and, in the preferred embodiments, includes voice and data channels, and signalling channels, originating with the earth station 16 and using the satellite 10 as a relay to the user terminal 14, or originating from the user terminal 14 and using the satellite 10 as a relay to the earth station 16. In the preferred embodiments of the invention, the base station 14 is as described with respect to Figure 1. It is to be understood that the function of the base station 24, as shown in Figure 1, is no different from that of a cellular telephone base station, itself on the surface of the earth 12, and, in that respect, the present invention applies equally to terrestrial cellular radio telephone systems.

In the preferred embodiments of the invention it is preferred that the earth station 16 can co-operate with the user terminal 14 to establish and disestablish (shut down) a voice grade radio channel capable of carrying slow data, such as packet radio data, in either direction. So far as the invention is concerned, it is not essential that the radio channel is voice grade, and the invention applies equally to systems where wider, faster data radio channels can be established and disestablished. Equally, it is not an important feature of the present invention exactly which data exchange standard or protocol is used. The preferred embodiment is directed towards packet radio. As will become clear from the following description, all that is required is a protocol and standard where the user terminal 14 and the earth station 16 can co-operate to establish, disestablish and validate a data channel over the radio channel that has previously or simultaneously been established.

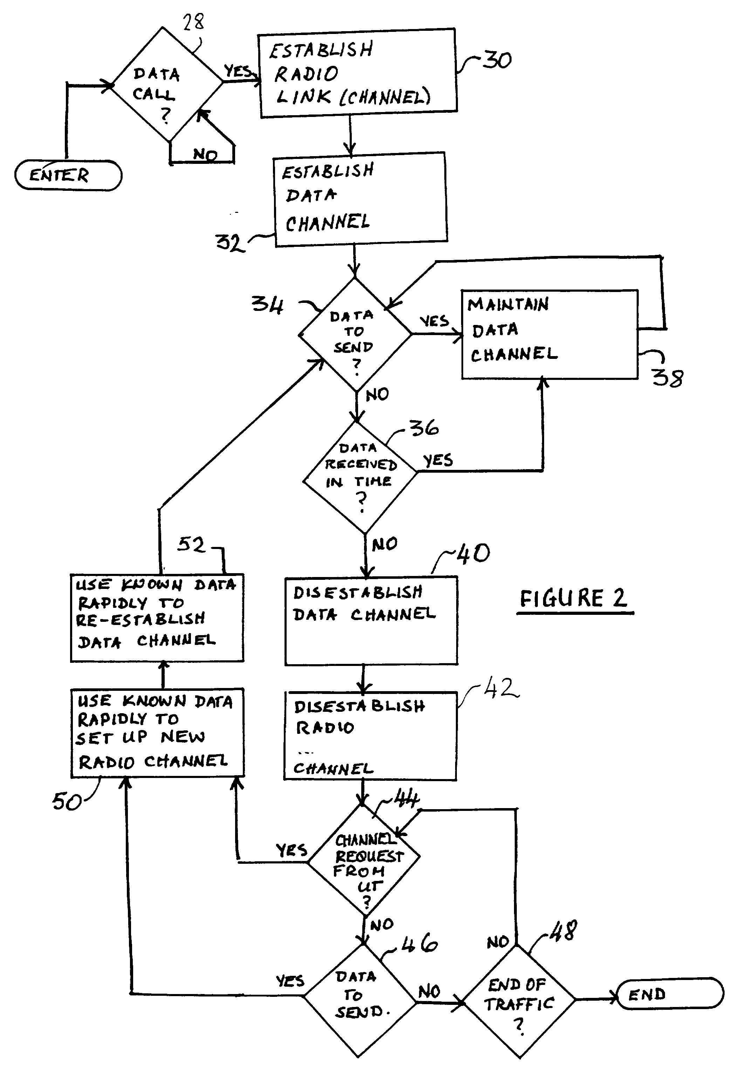

Figure 2 is a flowchart of the activity of the earth station 16 in setting up and progressing a data exchange with the user terminal 16. The function can be contained within the earth station 16, the earth station controller 18, or in any other device capable of maintaining functional and message exchange control of the earth station 18.

Entry is to a first test 28 which continuously (at least as part of a housekeeping cycle) monitors whether or not a data call is required. The data call may originate from the connection 20 and be destined for the user terminal 14, the earth station controller 18 receiving the call request in the normal way found in terrestrial networks. Alternatively, the data call can originate from the user terminal 14 by the user terminal 14 using the radio path 26 to signal to the earth station 16 to request a radio channel and indicating to the earth station 16 that a data exchange is required. This is indicated by setting a flag in a string of binary digits contained in the channel request. Other means can be used, such as a separate message. It is not really important how the earth station 18 learns that the radio channel request is for data exchange. It is simply necessary that the earth station 18 is made so aware.

If the first test 28 detects that there is a need for a data call, control passes to a first operation 30 in which the earth station 18 co-operates with the user terminal 14 to set up a radio channel on the radio path 26. In the preferred embodiments of the invention, the protocol involves verification between the earth station 18 and the user terminal 14 where SIM card numbers, IMSIs TIMIS's and encryption keys and computational results are exchanged between the earth station 18 and the user terminal 14 according to the GSM system, known to those skilled in the art. Once verified, the user terminal 14 is allocated a frequency for a radio channel which is then used between the two. In fact, the earth station 18 causes the satellite 10 to use a first frequency for transmission and a second frequency for reception, and the user terminal 14 uses the second frequency for transmission and the first frequency for reception. Both use a Time Division Multiple Access (TDMA) system, also known, to those skilled in the art, as part of the GSM standard. While this is a preferred system, it is to be understood that it is not important to the invention exactly what standard is used. It is simply necessary that the user terminal 14 and the earth station 16 can co-operate to establish a radio channel.

There is one important difference between the normal GSM standard and the first operation 30. In the first operation the earth station 16 remembers and stores the results and information it acquired during verification. These stored results are later used to re-establish the radio channel without the need for going through the slow verification process. Once again, it is not essential to the invention that GSM is the chosen standard. Results would be stored no matter what the standard chosen.

The first operation 30 passes control to a second operation 32 where the user terminal 14 and the earth station 16 co-operate to establish a data channel. The data channel is, conceptually, quite different from the radio channel. It does not really matter to the data channel what means is provided for the signals to be passed. A verification and set-up exchange passes between the user terminal 14 and the earth station 16 so that the identity of the user terminal 14 or its user and other operational and transactional data can be shared. In the preferred embodiment, the data exchange standard is GPRS (General Packet Radio System) for GSM. As was earlier stated, this is only the preferred standard, and any other data exchange standard, consistent with the properties of the radio channel, can be used. Just like the first operation 30, the second operation 32 remembers and stores the information it received during set-up and verification for later use in rapid re-establishment of the data channel.

Control then passes to a second test 34 where the earth station 16 checks to see if the earth station 16 has data to send. A minimum amount is required to pass the second test 34. In the preferred embodiments there require to be two or more complete packet data frames before the second test 34 is passed. The skilled man will be aware that other minimum criteria can be used.

If the second test 34 detects insufficient data, control passes to a third test 36 where the earth station 16 checks to see if the earth station 16 has received any packet data from the user terminal within a predetermined period. The test is passed if data has been received during the last 2 seconds. Those, skilled in the art, will be aware that other predetermined periods are also within the scope of the invention.

If either the second test 32 or the third test 36 is passed, control passes to a third operation 38 where the data channel is maintained and the user terminal 14 and the earth station 18 continue to exchange packet data.

If the third test 36 detects that no packet data has been received from the user terminal 14 within the predetermined period, control passes to a fourth operation 40 where the user terminal 14 and the earth station 16 co-operate to disestablish the data channel. Control then passes to a fifth operation 42 where the user terminal 14 and the earth station 16 co-operate to disestablish the radio channel. At this stage, the communication is effectively inert, and neither the user terminal 14 nor the earth station 16 expends any energy in transmission. The frequency(s) previously used for the radio channel are also free to be allocated to other user terminals 14 for whatever kind of communication is required.

Control next passes to a fourth test 44 which checks to see if a continuation of the data call is required by the user terminal, in the same manner as the first test 28. If no request is present, control passes to a fifth test 46 which operates, just like the second test 34, to see if the earth station has data to send according to the minimum criterion, earlier described. If insufficient data is present, control passes to a sixth test 48 which checks to see if either the earth station 16 or the user terminal 14 is desirous to end the data exchange on a permanent basis. If so, the stored data is discarded and the routine is exited.
If not, control passes back to the fourth test 44 so that the earth station 16 keeps monitoring when the data call should be continued.

If either the fourth test 44 or the fifth test 46 are passed, control passes to a sixth operation 50 where the user terminal 14 and the earth station 16 co-operate to establish a new radio channel (possibly) on a new set of frequencies in the radio path, but without the necessity of verification exchanges, as the earth station 16 uses the stored data from the first operation 30 to by-pass the verification and render the establishment of the new radio channel very rapid.

Control then passes to a seventh operation 52 where, using the new radio channel, where the user terminal 14 and the earth station 16 co-operate to re-establish the data channel, but using the verification and functional data from the second operation to by-pass verification and set-up exchanges and thereby render the reestablishment of the data channel very rapid.

The seventh operation passes control back to the second test 34.

Thus, the progress of a data call involves a sequence of rapid setting up and tearing down of the radio channel, a new radio channel being allocated on each occasion. with the data channel being torn down and rapidly set up within the series of radio channels. The radio channels are totally non-transmissive when there is no data to send, thus overcoming the waste of power possible during gaps, and making radio channels available for re-allocation in the gaps.

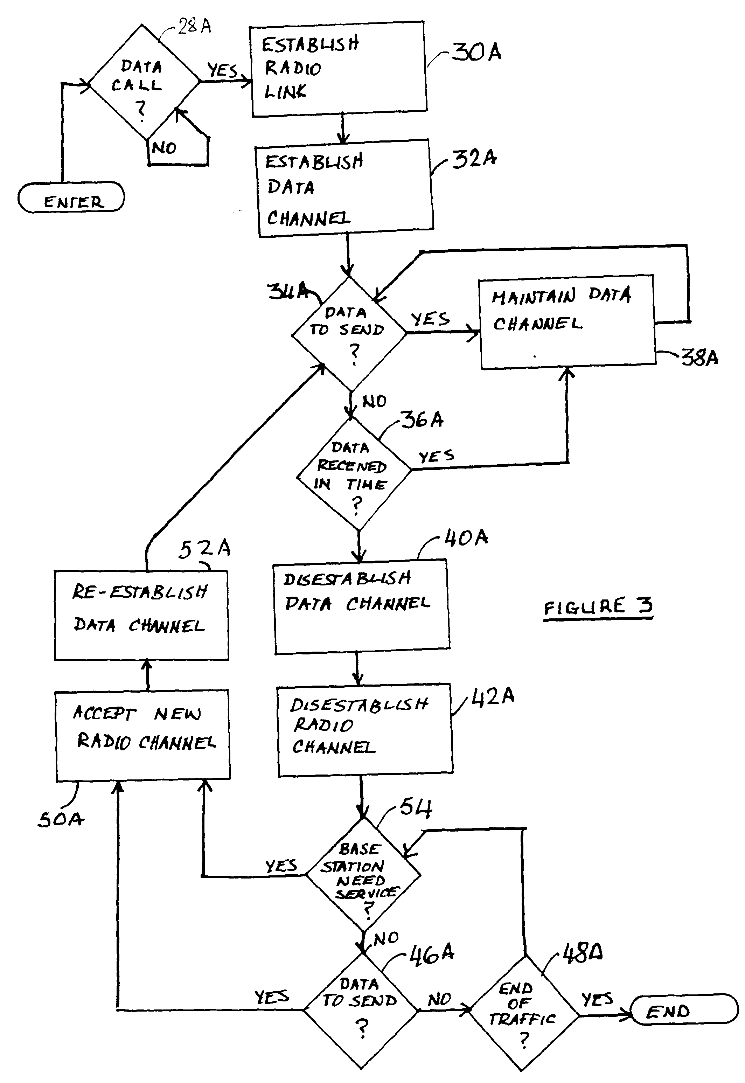

Figure 3 shows a flowchart giving the sequence of operations when the user terminal 14 co-operates with the earth station 16 during the sequence of Figure 2.

Like numbers 28A to 52A in Figure 3 designate like operations and tests in Figure 2. Curiously, the structure of the flowchart of figure 3 is the same as that of figure 2. with the exception that in the description the user terminal 14 changes places with the earth station 16. The earth station 16 and the user terminal 14 step through their respective and corresponding tests and operations together with the exception of the forth test 44 which is replaced by an eighth operation 54 where the user terminal 14 listens to see if the earth station 16 desires to continue the data call. In first operation 30A and second operation 32A the user terminal 14 is not required to store any data connected with establishment and verification, this being the sole duty of the earth station 16. Equally, in sixth operation 50A and seventh operation 52A the user terminal 14 merely accepts the radio channel and data channel, since the user terminal 14 stores no related establishment and verification data. Other than these differences, the two process are the same.

With regard to second tests 34 34A and third tests 36 36A. and with regard to fourth test 44 and eighth test 54, and with regard to fifth tests 46 46A, it is clear that either the user terminal 14 or the earth station 16 can be the driving force in initiating the disestablishment of the radio and data channels and the reestablishment of the radio and data channels.

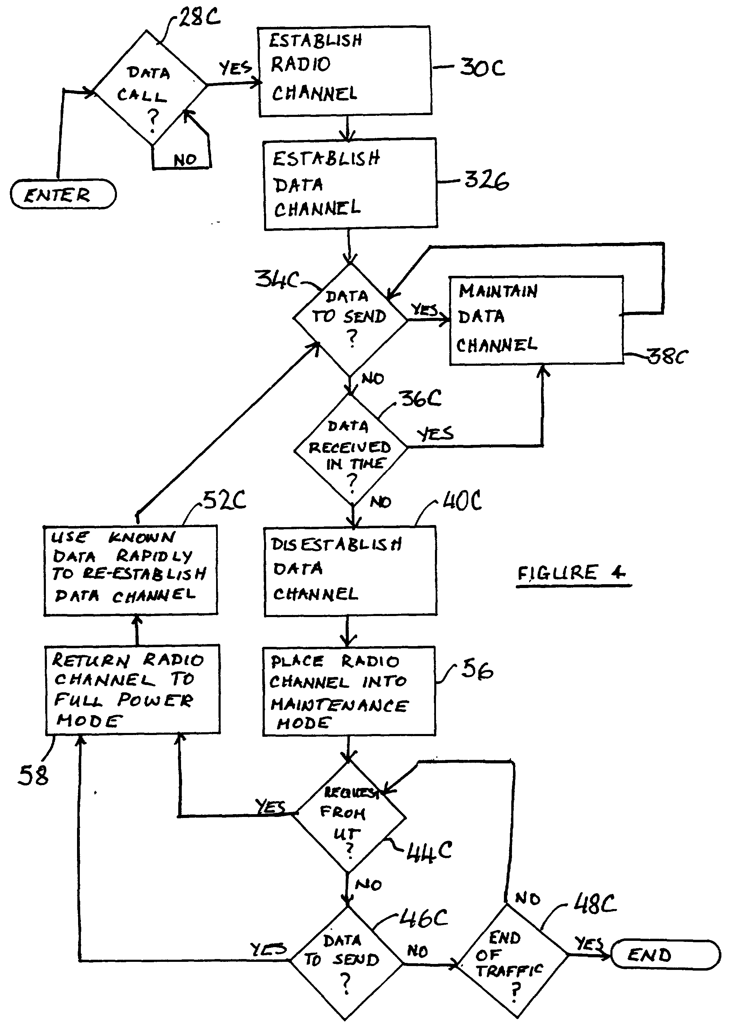

Figure 4 is a flowchart showing the activity of the earth station 16 in a second embodiment of the invention. Like numbers 28C to 52C relate to elements corresponding in their designation and description with the same numbers in figure 2. However, the fifth operation 42 is replaced with an eighth operation 56 where, instead of disestablishing the radio channel, the radio channel is kept and placed in a maintenance mode. The maintenance mode can take one of several forms:
a) The earth station 16 and the user terminal both cease to transmit on the radio channel and the earth station 16 sends periodic, short, spaced transmissions on a slow associated control channel (SACCH) (on a different frequency) to the user terminal 14 commanding the user terminal 14 to keep tuned to the radio channel frequency(s).
b) The power of the radio channel is reduced to a point where it can be maintained, but is insufficient for data transfer because of low signal margin.
c) The radio channel is used only intermittently, and then just sufficiently for it to be maintained.

Likewise, the sixth operation 50 is replaced with a ninth operation 58 where the earth station returns the radio channel to full operation by switching the power back on, or by turning the power back up, or by returning to a full duty cycle.

The second embodiment of the invention has the advantage, over the first embodiment, of removing the necessity of finding a new radio channel on each instance of continuation of the data call, and the disadvantage of not freeing the earlier radio channel for re-allocation during gaps in the data.

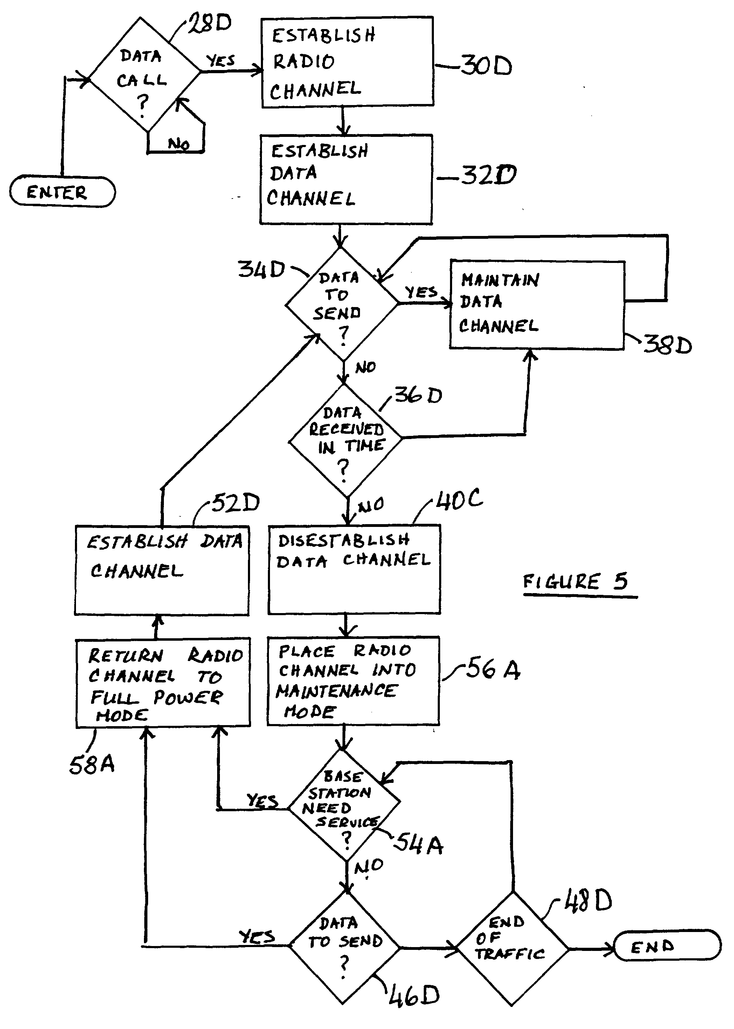

Finally, figure 5 is a flowchart of the operations of the user terminal 14 when cooperative with the earth station 16 when acting according to Figure 4. Like numbers correspond with like test and functions in relation to figure 3 and figure 4 and the same descriptions and limitations and changes exist between Figure 4 and Figure 5 as exist between Figure 2 and Figure 3, with the exception that the fifth operation 42 is replaced by an eighth operation 56A where the user terminal 14 co-operates with the earth station 16 to put the radio channel into maintenance mode, and the sixth operation 50A is replaced by a ninth operation 58A where the user terminal 14 co-operates with the earth station 16 to return the radio channel to full power.

The present invention is envisaged for use with all types of data, including internet data. The above described embodiments are simply exemplary of the present invention, and do not constitute a limitation thereto.

## Claims

**1.** A method for conducting data communications between a base station and a user terminal, via a radio path, said method including the steps of: establishing a first radio communications channel between said base station and said user terminal; establishing a data communications channel ,via said first radio communications channel, between said base station and said user terminal; determining whether or not said base station or said user terminal has data to send; maintaining said data communications channel between said base station and said user terminal when either said base station or said user terminal has data to send; disestablishing said data communications channel when neither said user terminal nor said base station has data to send; reestablishing said data communications channel when either or both of said user terminal and said base station have data to send; abandoning said first radio communications channel whenever said data communications channel is first disestablished; and establishing another radio communications channel whenever either said user terminal or said base station requires re-establishment of said data communications channel.

**2.** A method, according to claim 1, including the step of abandoning any another radio communications channel on each subsequent instance of disestablishment of said data communications channel, and establishing a subsequent another radio channel whenever said user terminal or said base station next requires re-establishment of said data communications channel.

**3.** A method, according to claim 1 wherein said establishment of said another radio communications channel employs data from establishment of said first radio communications channel directly to establish said another radio communications channel.

**4.** A method, according to claim 2 wherein said establishment of said subsequent another radio communications channel employs data from establishment of said first radio communications channel directly to establish said subsequent another radio communications channel.

**5.** A method, according to any of the preceding claims, wherein said data communications is packet data.

**6.** A method, according to any of the preceding claims, wherein said step of determining whether or not said base station or said user terminal has data to send includes said user terminal and said base station each having no data to send and neither said user terminal nor said base station having received any data for more than a predetermined period.

**7.** A method, according to any of the preceding claims, wherein said step of disestablishing said data communications channel includes independent initiation of disestablishement either by said base station or by said user terminal.

**8.** A method, according to any of the preceding claims, wherein said step of determining that said user terminal or said base station has data to send for initiating reestablishment of said data communications channel , includes either said user terminal or said base station having accumulated more than a predetermined amount of data for sending.

**9.** A method, according to any of the preceding claims, wherein said step of reestablishing said data communications channel includes independent initiation of reestablishment either by said base station or by said user terminal.

**10.** A method, according to any of the preceding claims, wherein said base station is a cellular radio base station.

**11.** A method, according to claim 1, 2, 3 ,4, 5, 6, 7, 8, 9 or 10 wherein said base station comprises an earth station and a communications satellite.

**11.** A communications system for conducting data communications between a base station and a user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**12.** A system , according to claim 11, wherein said maintenance mode includes reducing the power of said radio communications channel to the minimum power which will maintain said radio communications channel in an open condition.

**13.** A system. according to claim 11, wherein said maintenance mode includes reducing the power of said radio communications channel to zero, and maintaining said radio communications channel in an open conditions via periodic messages on a signalling channel.

**14.** A method, according to claim 11, 12 or 13, wherein said data communications is packet data.

**15.** A system, according to claim 11, 12 13 or 14 , wherein said system is operative to determine whether or not said base station or said user terminal has data to send whenever said user terminal and said base station each have no data to send and neither said user terminal nor said base station has received any data for more than a predetermined period.

**16.** A system, according to claim 11, 12, 13, 14 or 15, wherein said user terminal and said base station are each independently operable to initiate disestablishment of said data communications channel.

**17** A system, according to claim 11, 12, 13, 14 15 or 16, wherein said system is operative to determine that said user terminal or said base station has data to send for initiating reestablishment of said data communications channel , whenever either said user terminal or said base station has accumulated more than a predetermined amount of data for sending.

**18.** A system, according to claim 11. 12, 13, 14, 15, 16 or 17, wherein both said user terminal and said base station are independently operable to initiate reestablishment of said data communications channel.

**19.** A system, according to claim 11, 12, 13, 14, 15, 16, 17 or 18, wherein said base station is a cellular radio base station.

**20.** A system, according to claim 11, 12, 13, 14, 15, 16, 17, 18 or 19, wherein said base station comprises an earth station and a communications satellite.

**21.** A user terminal for use in a communications system for conducting data communications between a base station and said user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**22.** A user terminal, according to claim 21, for use in a system wherein said maintenance mode includes reducing the power of said radio communications channel to the minimum power which will maintain said radio communications channel in an open condition.

**23.** A user terminal, according to claim 21, for use in a system wherein said maintenance mode includes reducing the power of said radio communications channel to zero, and maintaining said radio communications channel in an open conditions via periodic messages on a signalling channel.

**24.** A user terminal, according to claim 21, 22 or 23, for use in a system wherein said data communications is packet data.

**25.** A user terminal, according to claim 21, 22, 23 or 24 , for use in a system wherein said system is operative to determine whether or not said base station or said user terminal has data to send whenever said user terminal and said base station each have no data to send and neither said user terminal nor said base station has received any data for more than a predetermined period.

**26.** A user terminal, according to claim 21, 22, 23, 24 or 25, for user in a system wherein said user terminal and said base station are each independently operable to initiate disestablishment of said data communications channel.

**27** A user terminal, according to claim 21, 22, 23, 24, 25 or 26, for use in a system wherein said system is operative to determine that said user terminal or said base station has data to send for initiating reestablishment of said data communications channel , whenever either said user terminal or said base station has accumulated more than a predetermined amount of data for sending.

**28.** A user terminal, according to claim 21, 22, 23, 24, 25, 26 or 27, for use in a system wherein both said user terminal and said base station are independently operable to initiate reestablishment of said data communications channel.

**29.** A user terminal, according to claim 21, 22, 23, 24, 25, 26, 27 or 28, for use in a system wherein said base station is a cellular radio base station.

**30.** A user terminal, according to claim 21, 22, 23, 24, 25, 26, 27, 28 or 29, for use in a system wherein said base station comprises an earth station and a communications satellite.

**31.** A base station, for use in a communications system for conducting data communications between said base station and a user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**32.** A base station, according to claim 31, for use in a system wherein said maintenance mode includes reducing the power of said radio communications channel to the minimum power which will maintain said radio communications channel in an open condition.

**33.** A base station, according to claim 31, for use in a system wherein said maintenance mode includes reducing the power of said radio communications channel to zero, and maintaining said radio communications channel in an open conditions via periodic messages on a signalling channel.

**34.** A base station, according to claim 31, 32 or 33, for use in a system wherein said data communications is packet data.

**35.** A base station, according to claim 31, 32, 33 or 34 , for use in a system wherein said system is operative to determine whether or not said base station or said user terminal has data to send whenever said user terminal and said base station each have no data to send and neither said user terminal nor said base station has received any data for more than a predetermined period.

**36.** A base station, according to claim 31, 32, 33, 34 or 35, for user in a system wherein said user terminal and said base station are each independently operable to initiate disestablishment of said data communications channel.

**37** A base station, according to claim 31, 32, 33, 34, 35 or 36, for use in a system wherein said system is operative to determine that said user terminal or said base station has data to send for initiating reestablishment of said data communications channel , whenever either said user terminal or said base station has accumulated more than a predetermined amount of data for sending.

**38.** A base station, according to claim 31, 32, 33, 34, 35, 36 or 37, for use in a system wherein both said user terminal and said base station are independently operable to initiate reestablishment of said data communications channel.

**39.** A base station, according to claim 31, 32, 33, 34, 35, 36, 37 or 38, said base station being a cellular radio base station.

**40.** A base station, according to claim 31, 32, 33, 34, 35, 36, 37, 38 or 39, comprising an earth station and a communications satellite.

## Amended claims

### Amended claims in accordance with Rule 86(2) EPC.

**1.** A method for conducting data communications between a base station and a user terminal, via a radio path, said method including the steps of: establishing a first radio communications channel between said base station and said user terminal; establishing a data communications channel ,via said first radio communications channel, between said base station and said user terminal; determining whether or not said base station or said user terminal has data to send; maintaining said data communications channel between said base station and said user terminal when either said base station or said user terminal has data to send; disestablishing said data communications channel when neither said user terminal nor said base station has data to send; reestablishing said data communications channel when either or both of said user terminal and said base station have data to send; abandoning said first radio communications channel whenever said data communications channel is first disestablished; and establishing another radio communications channel whenever either said user terminal or said base station requires re-establishment of said data communications channel.

**2.** A method, according to claim 1, including the step of abandoning any another radio communications channel on each subsequent instance of disestablishment of said data communications channel, and establishing a subsequent another radio channel whenever said user terminal or said base station next requires re-establishment of said data communications channel.

**3.** A method, according to claim 1 wherein said establishment of said another radio communications channel employs data from establishment of said first radio communications channel directly to establish said another radio communications channel.

**4.** A method, according to claim 2 wherein said establishment of said subsequent another radio communications channel employs data from establishment of said first radio communications channel directly to establish said subsequent another radio communications channel.

**5.** A method, according to any of the preceding claims, wherein said data communications is packet data.

**6.** A method, according to any of the preceding claims, wherein said step of determining whether or not said base station or said user terminal has data to send includes said user terminal and said base station each having no data to send and neither said user terminal nor said base station having received any data for more than a predetermined period.

**7.** A method, according to any of the preceding claims, wherein said step of disestablishing said data communications channel includes independent initiation of disestablishement either by said base station or by said user terminal.

**8.** A method, according to any of the preceding claims, wherein said step of determining that said user terminal or said base station has data to send for initiating reestablishment of said data communications channel , includes either said user terminal or said base station having accumulated more than a predetermined amount of data for sending.

**9.** A method, according to any of the preceding claims, wherein said step of reestablishing said data communications channel includes independent initiation of reestablishment either by said base station or by said user terminal.

**10.** A method, according to any of the preceding claims, wherein said base station is a cellular radio base station.

**11.** A method, according to any preceding claims wherein said base station comprises an earth station and a communications satellite.

**12.** A communications system for conducting data communications between a base station and a user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**13.** A system , according to claim 12, wherein said maintenance mode includes reducing the power of said radio communications channel to the minimum power which will maintain said radio communications channel in an open condition.

**14.** A system, according to claim 12, wherein said maintenance mode includes reducing the power of said radio communications channel to zero, and maintaining said radio communications channel in an open conditions via periodic messages on a signalling channel.

**15.** A system, according to any one of claims 12 to 14, wherein said data communications is packet data.

**16.** A system, according to any one of claims 12 to 15 , wherein said system is operative to determine whether or not said base station or said user terminal has data to send whenever said user terminal and said base station each have no data to send and neither said user terminal nor said base station has received any data for more than a predetermined period.

**17.** A system, according to any one claims 12 to 16, wherein said user terminal and said base station are each independently operable to initiate disestablishment of said data communications channel.

**18.** A system, according to any one of claims 12 to 17, wherein said system is operative to determine that said user terminal or said base station has data to send for initiating reestablishment of said data communications channel , whenever either said user terminal or said base station has accumulated more than a predetermined amount of data for sending.

**19.** A system, according to any one of claims 12 to 18, wherein both said user terminal and said base station are independently operable to initiate reestablishment of said data communications channel.

**20.** A system, according to any one of claims 12 to 19, wherein said base station is a cellular radio base station.

**21.** A system, according to any one of claims 12 to 20, wherein said base station comprises an earth station and a communications satellite.

**22.** A user terminal for use in a communications system for conducting data communications between a base station and said user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**23.** A user terminal, according to claim 22, for use in a system wherein said maintenance mode includes reducing the power of said radio communications channel to the minimum power which will maintain said radio communications channel in an open condition.

**24.** A user terminal, according to claim 22, for use in a system wherein said maintenance mode includes reducing the power of said radio communications channel to zero, and maintaining said radio communications channel in an open conditions via periodic messages on a signalling channel.

**25.** A user terminal, according to any one claims 22 to 24, for use in a system wherein said data communications is packet data.

**26.** A user terminal, according to any one of claims 22 to 25 , for use in a system wherein said system is operative to determine whether or not said base station or said user terminal has data to send whenever said user terminal and said base station each have no data to send and neither said user terminal nor said base station has received any data for more than a predetermined period.

**27.** A user terminal, according to any one of claims 22 to 26, for user in a system wherein said user terminal and said base station are each independently operable to initiate disestablishment of said data communications channel.

**28.** A user terminal, according to any one of claims 22 to 27, for use in a system wherein said system is operative to determine that said user terminal or said base station has data to send for initiating reestablishment of said data communications channel, whenever either said user terminal or said base station has accumulated more than a predetermined amount of data for sending.

**29.** A user terminal, according to any one of claims 22 to 28, for use in a system wherein both said user terminal and said base station are independently operable to initiate reestablishment of said data communications channel.

**30.** A user terminal, according to any one of claims 22 to 29, for use in a system wherein said base station is a cellular radio base station.

**31.** A user terminal, according to any one of claims 22 to 30, for use in a system wherein said base station comprises an earth station and a communications satellite.

**32.** A base station, for use in a communications system for conducting data communications between said base station and a user terminal, via a radio path, said system being operative to establish a radio communications channel between said base station and said user terminal; said system being operative to establish a data communications channel ,via said radio communications channel, between said base station and said user terminal; said system being operative to determine whether or not said base station or said user terminal has data to send; maintaining said data communications channel between said base station and said user terminal when either said base station or said user terminal has data to send; said system being operative to disestablish said data communications channel when neither said user terminal nor said base station has data to send; said system being operative to reestablish said data communications channel when either or both of said user terminal and said base station have data to send; and said system being operative to maintaining said radio communications channel in a minimal power maintenance mode whenever said data communications channel is disestablished.

**33.** A base station, according to claim 32, for use in a system wherein said maintenance mode includes reducing the power of said radio communications channel to the minimum power which will maintain said radio communications channel in an open condition.

34. A base station, according to claim 32, for use in a system wherein said maintenance mode includes reducing the power of said radio communications channel to zero, and maintaining said radio communications channel in an open conditions via periodic messages on a signalling channel.

**35.** A base station, according to any one of claims 32 to 34, for use in a system wherein said data communications is packet data.

**36.** A base station, according to any one of claims 32 to 35 , for use in a system wherein said system is operative to determine whether or not said base station or said user terminal has data to send whenever said user terminal and said base station each have no data to send and neither said user terminal nor said base station has received any data for more than a predetermined period.

**37.** A base station, according to any one of claims 32 to 36, for user in a system wherein said user terminal and said base station are each independently operable to initiate disestablishment of said data communications channel.

**38.** A base station, according to any one of claims 32 to 37, for use in a system wherein said system is operative to determine that said user terminal or said base station has data to send for initiating reestablishment of said data communications channel , whenever either said user terminal or said base station has accumulated more than a predetermined amount of data for sending.

**39.** A base station, according to any one of claims 32 to 38, for use in a system wherein both said user terminal and said base station are independently operable to initiate reestablishment of said data communications channel.

**40.** A base station, according to any one of claims 32 to 39, said base station being a cellular radio base station.

**41.** A base station, according to any one of claims 32 to 40, comprising an earth station and a communications satellite.
